# DEMANDE DE BREVET EUROPEEN

(11) **EP 0 733 507 A1**
(43) Date de publication de la demande: **25.09.1996**
(21) Numéro de dépôt: 96400536.7
(22) Date de dépôt: 15.03.1996
(51) Int. Cl.: B60J 10/04, B60J 10/06

(54) **Joint d'étanchéité pour vitre coulissante de véhicule**

(30) Priorité: 22.03.1995 FR 9503329
(71) Demandeur: STANDARD PRODUCTS INDUSTRIEL, F-95871 Bezons (FR)
(72) Inventeur: Piednoel, René M., 78800 Houilles (FR); Phan, Xuan Mai, 95130 Franconville (FR)
(74) Mandataire: Busnel, Jean-Benoît

(57) **Abrégé**

L'invention concerne un joint d'étanchéité pour vitre coulissante (C) de véhicule comprenant un premier élément (1) constitué d'une partie interne (10) de section en U pour l'ancrage sur la feuillure (F,F') de carrosserie et d'une partie externe (11) pour assurer l'étanchéité du côté extérieur de la vitre (C), un second élément (2) constitué d'une part d'une lèvre d'étanchéité et de glissement (20) au contact de la face interne de la vitre (C) et, d'autre part d'une lèvre d'habillage (22) de la feuillure (F') de l'habitacle ; ledit premier élément (1) comportant des moyens de fixation amovible dudit second élément (2) sur la partie interne (10).

Selon l'invention, lesdits organes de fixation amovible sont constitués d'une part d'une gorge (12) réalisée sur la partie interne (10) dudit premier élément (1) et dans laquelle est verrouillé un premier crochet (21) ménagé à la base de ladite lèvre d'étanchéité (20) et, d'autre part, d'une languette (14) solidaire de la branche intérieure (10a) de la partie interne (10) en U, sur la face en regard de la feuillure (F') et sur laquelle est verrouillé un second crochet (24) porté par ladite lèvre d'habillage.

## Description

La présente invention concerne un joint d'étanchéité pour vitre coulissante de véhicule.

Le FR 2 696 377 décrit déjà un joint d'étanchéité comprenant : un premier élément constitué d'une partie interne de section en U pour l'ancrage sur la feuillure de carrosserie et d'une partie externe pour assurer l'étanchéité du côté extérieur de la vitre, un second élément constitué d'une part d'une lèvre d'étanchéité et de glissement au contact de la face interne de la vitre et, d'autre part, d'une lèvre d'habillage de la feuillure interne de l'habitacle.

Le premier élément comporte des moyens de fixation amovible du second élément sur la partie interne du premier élément. Ces moyens sont constitués d'une part d'un organe de fixation de la lèvre d'étanchéité et de glissement et, d'autre part, d'un organe de fixation de la lèvre d'habillage.

En effet, les lèvres assurant l'étanchéité de part et d'autre de la vitre doivent être soit revêtues d'un matériau glissant soit floquées. Or, il a été trouvé que l'opération de revêtement de ces lèvres est grandement facilitée lorsque l'une des lèvres d'étanchéité est portée par un second élément réalisé sous forme amovible.

Dans cet objectif, l'organe de fixation et notamment celui de la lèvre d'habillage est constitué d'un insert de liaison retenu par une première extrémité dans une rainure ménagée sur ladite lèvre et encliqueté par une autre extrémité dans un logement à ouverture élastiquement déformable, réalisé sur la partie interne du premier élément.

Cependant, un tel joint requiert l'utilisation d'un insert rapporté ainsi que la réalisation de cavités (rainures, logements...) tant sur le premier que le second élément.

Ces contraintes rendent le joint relativement onéreux.

En outre, le mode de fixation de la lèvre d'habillage n'est pas satisfaisant dans la mesure où la présence de l'insert entraîne un certain jeu qu'il est très difficile de compenser.

De plus, la fixation se fait sur la face extérieure de la branche intérieure de la partie interne en U, ce qui a pour conséquence d'affaiblir l'ancrage du joint sur la feuillure.

L'invention a pour but de résoudre ces problèmes techniques de manière satisfaisante.

Ce but est atteint, selon l'invention au moyen d'un joint d'étanchéité pour vitre coulissante de véhicule comprenant un premier élément constitué d'une partie interne de section en U pour l'ancrage sur la feuillure de carrosserie et d'une partie externe pour assurer l'étanchéité du côté extérieur de la vitre, un second élément constitué d'une part d'une lèvre d'étanchéité et de glissement au contact de la face interne de la vitre et, d'autre part d'une lèvre d'habillage de la feuillure de l'habitacle ; ledit premier élément comportant des moyens de fixation amovible dudit second élément sur la partie interne, caractérisé en ce que lesdits organes de fixation amovible sont constitués d'une part d'une gorge réalisée sur la partie interne dudit premier élément et dans laquelle est verrouillé un premier crochet ménagé à la base de ladite lèvre d'étanchéité et, d'autre part, d'une languette solidaire de la branche intérieure de la partie interne en U, sur la face en regard de la feuillure et sur laquelle est verrouillé un second crochet porté par ladite lèvre d'habillage.

Selon une caractéristique avantageuse, ledit second crochet possède un dos plat qui est, en position de verrouillage, au contact de la feuillure dite pour renforcer l'ancrage de la partie interne du premier élément sur la feuillure.

Selon d'autres caractéristiques, ladite languette est réalisée à l'extrémité de la branche intérieure de la partie interne en U et ledit second crochet est rattaché à la lèvre d'habillage par un flanc de liaison dont le profil épouse sensiblement celui de la feuillure.

Selon encore une autre caractéristique, la lèvre d'étanchéité et de glissement comporte un élément longitudinal interne de renfort, intégré dans sa base.

Il est également prévu que le profil de ladite lèvre d'habillage est variable longitudinalement pour s'adapter au profil évolutif de la feuillure du caisson de l'habitacle.

Par ailleurs, ladite gorge de la partie interne du premier élément est réalisée soit en utilisant une matière rigide obtenue par exemple par mélange de la matière constitutive de la branche extérieure de ladite partie interne avec une matière plus dure soit par un surmoulage rigide de ladite partie interne.

Pour parfaire l'étanchéité et l'aspect esthétique, la face intérieure dudit second élément épouse le profil de la face extérieure dudit premier élément.

Le joint de la présente invention est économique et son montage est particulièrement aisé.

Il assure une meilleure couverture de la feuillure de l'habitacle ainsi qu'une fixation plus efficace du second élément sur le premier élément ce qui améliore l'aspect esthétique d'ensemble. En effet, comme les premier et second crochets sont réalisés aux extrémités opposées du second élément, ce dernier peut être monté sur le premier élément avec un léger étirement ce qui garantit un verrouillage de la fixation et permet d'éviter tout plissement des surfaces apparentes.

Par ailleurs, le second élément permet de masquer les ondulations créées sur la branche interne du premier élément par les zones ajourées de l'armature interne.

En outre, l'ancrage de la partie interne sur la feuillure est renforcé ce qui améliore l'étanchéité de l'habitacle.

Le joint de l'invention trouve plus particulièrement son application au niveau d'une coulisse de vitre mobile.

L'invention sera mieux comprise à la lecture de la description qui va suivre, accompagnée du dessin unique qui représente une vue en coupe d'un mode de réalisation du joint de l'invention.

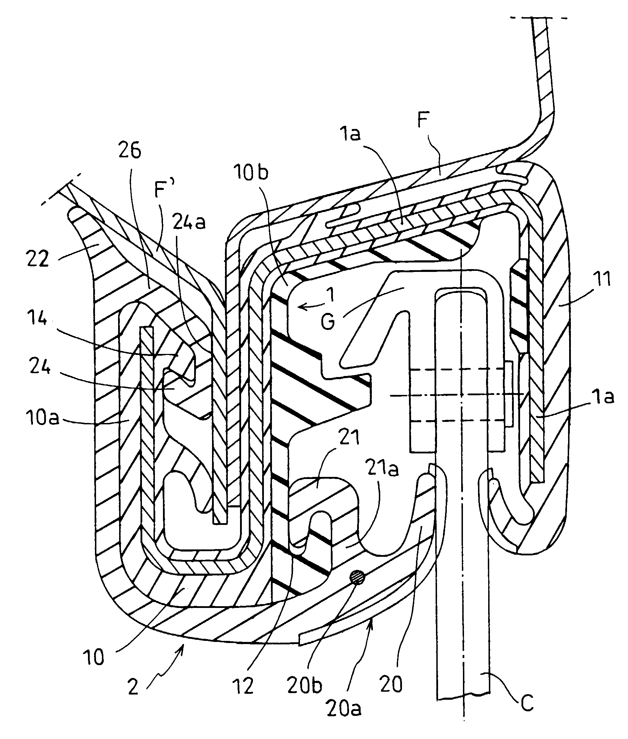

Le joint représenté sur la figure 1 est plus particulièrement destiné à former une coulisse de vitre mobile C qui est éventuellement équipée d'un patin de guidage G.

Ce joint comprend un premier élément 1 constitué d'une partie interne 10 de section en U assurant l'ancrage sur la feuillure F,F' de carrosserie et d'une partie externe 11 assurant l'étanchéité du côté extérieur de la vitre C. Les parties interne 10 et externe 11 sont reliées par l'intermédiaire de l'armature interne 1a.

Le joint comprend également un second élément 2 constitué d'une part d'une lèvre d'étanchéité et de glissement 20 qui est au contact de la face interne de la vitre C et, d'autre part, d'une lèvre d'habillage 22 de la feuillure interne F' du caisson de l'habitacle.

Le premier élément 1 comprend des moyens de fixation amovible du second élément 2 sur la partie interne 10. Ces moyens de fixation sont constitués d'une part d'une gorge 12 réalisée sur la partie interne 10 et dans laquelle est verrouillé un premier crochet 21 ménagé à la base de la lèvre d'étanchéité 20 et d'autre part d'une languette 14 solidaire de la branche intérieure 10a de la partie interne 10 en U, du côté de la face intérieure en regard de la feuillure F' et sur laquelle est verrouillé un second crochet 24 porté par la lèvre d'habillage 22. Le second élément 2 est donc monté de manière amovible sur le premier élément 1 en étant verrouillé à ses deux extrémités opposées. Compte tenu de l'élasticité du matériau constitutif du second élément 2, il est possible de prévoir qu'en position de verrouillage, le second élément soit légèrement étiré entre ses deux extrémités opposées.

Dans tous les cas, la face intérieure du second élément 2 épouse le profil de la face externe du premier élément 1 en étant en contact avec elle sur toute sa surface.

Le second crochet 24 possède un dos plat 24a qui est en position de verrouillage au contact de la feuillure interne F'. Cette disposition permet de renforcer l'ancrage de la partie interne 10 sur la feuillure F,F'.

La languette 14 est réalisée à l'extrémité de la branche intérieure 10a de la partie interne 10 tandis que le second crochet 24 est rattaché à la lèvre d'habillage 22 par un flanc de liaison 26 dont le profil épouse sensiblement celui de la feuillure interne F'. Le profil de la lèvre d'habillage 22 est variable longitudinalement pour s'adapter au profil évolutif de la feuillure interne F' du caisson de l'habitacle.

La lèvre d'étanchéité 20 est recouverte, sur sa face en contact avec la vitre mobile C d'un matériau glissant ou "flock" 20a.

La lèvre 20 comporte également un élément longitudinal interne 20b de renfort qui est intégré dans sa base, au niveau de la zone de jonction 21a avec le crochet 21. Le profil de la lèvre 20 est variable longitudinalement pour s'adapter à la longueur de la partie externe 11 qui est plus ou moins longue en fonction de l'emplacement du joint.

La gorge 12 de la partie interne 10 est, de préférence, réalisée en utilisant un mélange rigide extrudé en même temps que l'élément 1, et formant une garniture 10b de la branche extérieure de la partie interne 10.

## Revendications

1. Joint d'étanchéité pour vitre coulissante (C) de véhicule comprenant un premier élément (1) constitué d'une partie interne (10) de section en U pour l'ancrage sur la feuillure (F,F') de carrosserie et d'une partie externe (11) pour assurer l'étanchéité du côté extérieur de la vitre (C), un second élément (2) constitué d'une part d'une lèvre d'étanchéité et de glissement (20) au contact de la face interne de la vitre (C) et, d'autre part d'une lèvre d'habillage (22) de la feuillure (F') de l'habitacle ; ledit premier élément (1) comportant des moyens de fixation amovible dudit second élément (2) sur la partie interne (10),
caractérisé en ce que lesdits organes de fixation amovible sont constitués d'une part d'une gorge (12) réalisée sur la partie interne (10) dudit premier élément (1) et dans laquelle est verrouillé un premier crochet (21) ménagé à la base de ladite lèvre d'étanchéité (20) et, d'autre part, d'une languette (14) solidaire de la branche intérieure (10a) de la partie interne (10) en U, sur la face en regard de la feuillure (F') et sur laquelle est verrouillé un second crochet (24) porté par ladite lèvre d'habillage (22).

2. Joint selon la revendication 1, caractérisé en ce que ledit second crochet possède un dos plat (24a) qui est, en position de verrouillage, au contact de la feuillure (F') pour renforcer l'ancrage de la partie interne (10) du premier élément (1) sur ladite feuillure (F,F').

3. Joint selon la revendication 1 ou 2, caractérisé en ce que ladite languette (14) est réalisée à l'extrémité de la branche intérieure (10a) de la partie interne (10) en U.

4. Joint selon l'une des revendications précédentes, caractérisé en ce que ledit second crochet (24) est rattaché à la lèvre d'habillage (22) par un flanc de liaison (26) dont le profil épouse sensiblement celui de la feuillure (F').

5. Joint selon l'une des revendications précédentes, caractérisé en ce que la lèvre (20) d'étanchéité et de glissement comporte un élément longitudinal interne (20b) de renfort intégré dans sa base.

6. Joint selon l'une des revendications précédentes, caractérisé en ce que le profil de ladite lèvre d'habillage (22) est variable longitudinalement pour s'adapter au profil évolutif de la feuillure (F') du caisson de l'habitacle.

7. Joint selon l'une des revendications précédentes, caractérisé en ce que ladite gorge (12) de la partie interne (10) du premier élément (1) est réalisée avec une matière rigide formant une garniture (10b) de la branche extérieure de ladite partie interne (10).

8. Joint selon l'une des revendications précédentes, caractérisé en ce que la face intérieure dudit second élément (2) épouse le profil de la face externe dudit premier élément (1).
